(19) **Europäisches Patentamt European Patent Office Office européen des brevets**

(11) **EP 3 436 692 B1**

(12) **EUROPEAN PATENT SPECIFICATION**

(45) Date of publication and mention of the grant of the patent:
**07.08.2024  Bulletin 2024/32**

(21) Application number: **17712016.9**

(22) Date of filing: **15.03.2017**

(51) International Patent Classification (IPC):
**F03D 7/02** *(2006.01)*  **F03D 9/25** *(2016.01)*
**H02J 3/38** *(2006.01)*  **F03D 7/04** *(2006.01)*
**H02J 3/46** *(2006.01)*  **H02J 13/00** *(2006.01)*

(52) Cooperative Patent Classification (CPC):
**F03D 7/0272; F03D 7/048; F03D 9/255;
F03D 9/257; H02J 3/381; H02J 3/46;
H02J 13/00028; H02J 13/00034;** F05B 2270/337;
H02J 2300/24; H02J 2300/28; Y02E 10/56;
Y02E 10/72; Y02E 10/76; Y02E 40/70;      (Cont.)

(86) International application number:
**PCT/DK2017/050074**

(87) International publication number:
**WO 2017/167335 (05.10.2017 Gazette 2017/40)**

(54) **IMPROVEMENTS RELATING TO THE INTERCONNECTION OF MULTIPLE RENEWABLE ENERGY POWER PLANTS**

VERBESSERUNGEN IM ZUSAMMENHANG MIT DER ZUSAMMENSCHALTUNG MEHRERER KRAFTWERKE FÜR ERNEUERBARE ENERGIEN

AMÉLIORATIONS CONCERNANT L'INTERCONNEXION DE MULTIPLES CENTRALES À ÉNERGIE RENOUVELABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **31.03.2016  DK 201670178**

(43) Date of publication of application:
**06.02.2019  Bulletin 2019/06**

(73) Proprietor: **Vestas Wind Systems A/S
8200 Aarhus N (DK)**

(72) Inventors:
• **GUPTA, Manoj
  Singapore 118174 (SG)**
• **LÆRKE, Rasmus
  8260 Viby J (DK)**
• **MA, Yuchao
  Singapore 120303 (SG)**
• **PANNI, Rubin
  Singapore 398074 (SG)**
• **VALCAN, Dumitru-Mihai
  8900 Randers C (DK)**

(74) Representative: **Vestas Patents Department
Hedeager 42
8200 Aarhus N (DK)**

(56) References cited:
**EP-A1- 2 800 224      US-A1- 2009 218 817
US-A1- 2010 025 994   US-A1- 2012 010 755**

(52) Cooperative Patent Classification (CPC): (Cont.)
Y02E 60/00; Y02P 80/14; Y04S 10/123;
Y04S 40/128

**Description**

**Technical field**

The invention relates to controlling a power plant in a power distribution network, or grid, in which more than one power plant is connected to a transmission line. In particular, but not exclusively, the invention relates to controlling a wind power plant.

**Background to the invention**

Typically, a wind power plant is connected to a regional or national power distribution network or 'grid' by a transmission line. The transmission line connects the wind power plant to the grid at a point of interconnection or 'POI'.

A Transmission System Operator (TSO) governs the connection requirements of the wind power plant into the grid and defines voltage and power characteristics to which the wind power plant must comply at the POI. This is sometimes referred to as the grid connection specification or 'grid code requirement'.

There may be a considerable distance between the wind power plant and the POI, sometimes in the region of hundreds of kilometres, and this causes significant impedance along the transmission line which has the effect of reducing the power actually delivered by the wind power plant to the grid at the POI due to line losses. It is known to implement 'line droop compensation' in which the impedance along the transmission line is estimated whereby a power plant controller (PPC) associated with the wind power plant is able to regulate the power delivered by the power plant in order to compensate for the line droop thereby to ensure that the power actually injected at the POI better complies with the grid code requirement. It will be noted that to term 'power' refers to both active and reactive power, so a wind turbine may be required to compensate for active as well as reactive power loss. For active power compensation, a wind turbine may be operated in a curtailed mode so it can run up to full active power delivery as and when required. For reactive power loss compensation, a wind turbine may supply extra reactive power up to a maximum level, including extra compensation equipment available at a substation of an associated power plant, such as capacitor banks or static compensators (STATCOM).

Due to increasing penetration of renewable energy power plants, and particularly wind power plants, it is becoming more common for more than one large power plant to be located in a particular geographical region. This may require multiple power plants to share a single transmission line to the POI to the main distribution grid. This presents a challenge to a PPC to regulate the power delivered by its associated wind power plant to ensure that the power characteristics at the POI comply with the relevant grid code specification.

EP2800224 A1 discloses a method for determining electrical characteristics, such as power delivery, at a point of regulation based on power measurements from each of the energy production units of a power plant.

US2010025994 A1 discloses a controller for controlling the operation of a plurality of local wind farms to regulate system quantities at a point of common coupling of the wind farms.

US2009218817 A1 discloses a system for minimizing electrical loss in the power produced by an energy power plant.

It is against this background that the embodiments of the invention have been devised.

**Summary of the invention**

In a first aspect, the invention provides a computer-implemented method of controlling a first renewable energy power plant using a respective power plant controller, wherein the first renewable energy power plant comprises a plurality of wind turbine generators, the method comprising operating the power plant controller to:

determine power delivery of the first renewable energy power plant to a collector bus, wherein the step of determining power delivery of the first renewable energy power plant to the collector bus includes: measuring the power delivery of the first renewable energy power plant at a connection point of the first renewable energy power plant to a first transmission line that connects the first renewable energy power plant to the collector bus; and compensating for transmission line power loss on the first transmission line;

receive data relating to power delivery from a second renewable energy power plant connected to the collector bus;

determine the combined power delivery of the first and second renewable energy power plants to the collector bus;

estimate the transmission line power loss on a second transmission line between the collector bus and a power grid point of interconnection (POI) based on the combined power delivery; and

regulate the power delivery from the first renewable energy power plant to compensate for the estimated transmission line power loss on the second transmission line.

The invention also resides in a computer program product downloadable from a communication network and/or stored on a machine readable medium, comprising program code instructions for implementing a method as defined above.

In another aspect, the invention provides a power plant controller for a respective renewable energy power plant configured to control at least one power delivery characteristic of the renewable energy power plant at a connection point to a collector bus, the power plant comprising a plurality of wind turbine generators, the power plant controller comprising:

an interface for receiving data relating to power delivery from a second renewable energy power plant connected to the collector bus, wherein the second renewable energy power plant comprises a plurality of wind turbine generators;

wherein the power plant controller is configured to:

determine power delivery of the first renewable energy power plant to the collector bus, wherein determining power delivery of the first renewable energy power plant to the collector bus includes: measuring the power delivery of the first renewable energy power plant at the connection point of the first renewable energy power plant to a first transmission line that connects the first renewable energy power plant to the collector bus; and compensating for transmission line power loss on the first transmission line;

receive data relating to power delivery over the interface from the second renewable energy power plant connected to the collector bus;

determine the combined power delivery of the first and second renewable energy power plants to the collector bus;

estimate the transmission line power loss on a second transmission line between the collector bus and a power grid point of interconnection (POI) based on the determined combined power delivery; and

regulate the power delivery from the first renewable energy power plant to compensate for the estimated transmission line power loss on the second transmission line.

The embodiments of the invention provide an approach for a power plant controller to control its output, taking into account the power delivery from other power plants whilst compensating for power losses on relevant transmission lines, in order that the power delivered at the POI to a transmission grid better meets the grid specification defined by the grid operator. The power plant controller of the first wind power plant may be configured to receive data from one or more other power plants relating to the power delivered by them (active and reactive power, and voltage) and so the controller has the information that is necessary to compensate for the transmission line losses between it and the transmission grid and may be operable to increase its power delivery, that is to say, to increase its output voltage, active power and reactive power, in order to ensure that the power delivered at the POI of transmission grid meets that which is demanded by the grid operator.

It should be appreciated that references the term 'power' and 'power loss' should be interpreted to mean active power, reactive power, or a combination of active and reactive power at any suitable proportion.

References to 'second' renewable energy power plant should be interpreted as meaning one or more other power plants.

In one embodiment, the power delivery data associated with the second renewable energy power plant may be received from a respective power plant controller that measures directly the power delivery of said power plant. In alternative embodiments, the power delivery data associated with the second renewable energy power plant is received from a respective power plant controller that estimates the power delivery of said power plant

The step of determining the combined power delivery may include summing the power delivery of the first and second renewable energy power plants. The step of regulating the power delivery from the first renewable energy power plant may include adding a compensation factor to the determined power delivery from that power plant.

The invention has particular utility to wind power plants, but also applies to other types of renewable energy power plants.

It will be appreciated that preferred and/or optional features of the first aspect of the invention may be incorporated alone or in appropriate combination in the second aspect of the invention also.

**Brief description of the drawings**

So that it may be more fully understood, the invention will now be described, by way of example only, with reference to the following drawings, in which:

Figure 1 is a schematic diagram of a power network, including more than one wind power plants that are configured to supply power to a point of interconnection at a power grid;

Figure 2 is a schematic diagram showing the power network of Figure 1 in more detail;

Figure 3 is a process flow chart depicting a method according to an embodiment of the invention; and

Figure 4 and 5 are schematic diagrams showing power networks in accordance with alternative embodiments of the invention.

**Detailed description of embodiments of the invention**

Embodiments of the invention provide methods and techniques for controlling one or more wind turbines of a wind power plant so as to regulate power delivery to a power network in order to meet grid interconnection demands. Conventionally, large wind power plants are connected to a regional or national power distribution grid by a dedicated transmission line. Power plant controllers associated with those respective power plants may therefore be equipped with control strategies for controlling the power output of the power plant in order to regulate the power injected into the distribution grid at the point of interconnection, or POI, at which the transmission line connects to the distribution grid. This ensures that the actual power delivered by the power plant at the POI meets the grid code requirement that are dictated by a transmission system operator, or TSO, associated with the distribution grid.

In practical terms, controlling the wind turbines of a power plant might involve providing reference values for voltage (V), active power (P) and reactive power (Q) for each of the wind turbines populating the power plant. Such reference values may be dispatched by a dispatcher of the power plant controller as would be well understood by those skilled in the art. The reference values dispatched may be the same for all of the wind turbines in the power plant, taking account of any non-operational wind turbines, as appropriate, or the reference values may be determined for each wind turbine specifically based on a calculation that takes into account issues such as the operating capacity of the wind turbine, wind conditions prevailing at the specific site or each wind turbine, the requirement for energy storage, and so on.

Government policies have in part driven the increasing penetration of wind power into the power generation mix in the UK and worldwide. The planning and commissioning of more and more wind power plants of various capacities, and indeed other forms of renewal power generation, means that it is not necessarily appropriate, possible, or economically viable to connect each of those power plants to the distribution grid by its own dedicated transmission line. Instead, it may be desirable for multiple power plants to feed in to the distribution grid by way of a common transmission line. So, multiple power plants may be coupled to an electrical network to provide access to the common transmission line. Such an electrical network may be referred to as a collector bus or grid, or also a local grid.

A challenge of this is that the multiple power plants coupled to the collector bus may have different capacities, may be operated by different power companies, and may comprise turbines from different manufacturers. Therefore, this mix is challenging in terms of ensuring that the power delivery at the POI of the common transmission line to the distribution grid meets the grid specification. Determining how a wind power plant should be operated to accommodate this complicate mix of operational issues is not straightforward.

In the discussion that follows, various layouts of power networks will be described in which multiple wind power plants are connected to a common point or bus, and are thereafter connected to a main power transmission or power distribution grid by a common transmission line. Suitable control strategies will also be explained that may be implemented by one of the power plant controllers associated with a respective wind power plant in order to regulate more effectively the power characteristics delivered at the point of interconnection with the main transmission grid in order that those power characteristics or, more simply 'delivered power', match more closely the grid specification set by a grid operator despite the significant losses associated with the transmission of said power along the transmission line to the main transmission grid.

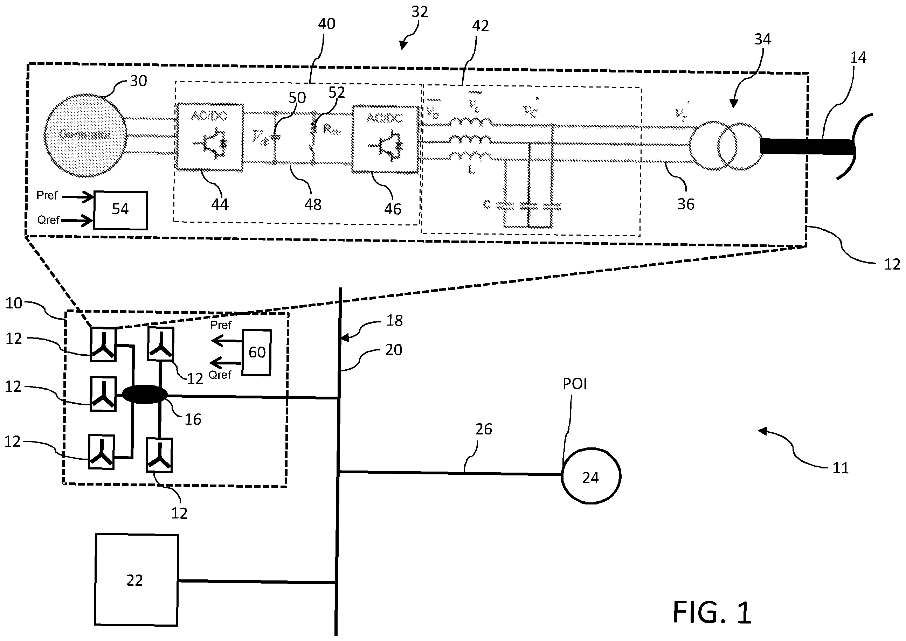

With reference now to Figure 1, an example of a wind power plant 10 in a wider power network 11 is shown to which methods according to embodiments of the invention may be applied. The example shown is representative only and the skilled reader will appreciate that the methods described below may be applicable to many different configurations. Moreover, the components of the wind power plant 10 are conventional and as such would be familiar to the skilled reader, and so will only be described in overview.

The wind power plant 10 shown in Figure 1 includes a plurality of wind turbine generators 12 or more simply 'wind turbines', but a single wind turbine would also be possible. The wind turbines 12 are connected to a plant-level power network or 'grid' 16 which, in turn, is connected to a collector bus 18. The collector bus 18 provides a common point of coupling PCC for a plurality of wind power plants, although only a second wind power plant 22 is shown in Figure 1. The collector bus 18 may be at an intermediate voltage level that is suitable for relatively short distance power transmission, for example in the region of 10-150kV, most usually between 110 and 150kV.

The collector bus 18 is connected to a power transmission grid 24 by a transmission line 26. Whereas the collector bus 18 may be configured to network different power plants, and so may be required to span distances in the order of 100km, the transmission grid 24 may be a regional- or national-level network and so may be required to span distances of much between 25km to 250km. Accordingly, the voltage level of the transmission grid 24 may be much higher than the voltage level of the collector bus for better transmission efficiency. To put it in context, transmission grids are usually operated in the order of up to and even above 300kV (usually 150-400kV). It should be noted that transformers that would be necessary to step up and step down the voltages between various parts of the network are not shown here, but their presence is implied.

Although Figure 1 is in general a high-level schematic to illustrate the main items in the power network 11, one of the wind turbines 12 of the wind power plant 10 is shown schematically in the inset panel for completeness, and will now be describe here briefly. The wind turbine 12 comprises a generator 30 that is driven by a rotor (not shown) to produce electrical power that is transmitted through a power converter system 32 to a coupling transformer 34 via a low voltage link 36.

Electrical power produced by the generator 30 is delivered to the electrical network 14 through the coupling transformer 34 which functions to step up the voltage generated by the power system 32 (typically a line voltage in the order of 400-500V) to a voltage that matches the voltage of the plant-level power network 16.

The power produced in the generator 30 is three-phase AC, but is not in a form suitable for delivery to the plant-level power network 16, in particular because it is typically not at the correct frequency or phase angle. Accordingly, the power converter system 32 includes a power converter 40 and a filter 42 disposed between the generator 30 and the coupling transformer 34 to process the generator output into a suitable waveform having the same frequency as the plant-level power network 16 and the appropriate phase angle.

The AC output of the power converter 40 is fed to the coupling transformer 34 by way of the low voltage link 36. Typically the low voltage link 36 will have a line voltage of below about 1kV, by way of example. The low voltage link 36 is depicted here as comprising three lines, reflecting the fact that it is a three-phase system. The power output of the power converter 40 is conditioned by the filter 42, represented here by a suitable inductor/capacitor network, to provide low-pass filtering for removing high frequency noise from the AC waveform.

Modern wind turbines may have different architectures, so the following discussion should be considered to be for illustrative purposes only. In the illustrated example, the power converter 40 has a full-scale back-to-back power converter architecture which is known generally in the art. As such, the power converter 40 provides full-scale AC to AC conversion by feeding electrical current through an AC-DC converter 44 and a DC-AC converter 46. The AC-DC converter 44 is connected to the DC-AC converter 46 by a conventional DC link 48, which includes a capacitor 50 providing smoothing for the DC output and a switched resistor 52 to act as a dump load to enable excess energy to be discharged if operational circumstances dictate that it is necessary. The smoothed DC output of the AC-DC converter 44 is received as a DC input by the DC-AC converter 46 which generates a three-phase AC output for delivery to the coupling transformer 34. As an example, another suitable architecture for a utility-scale wind turbine would be a doubly-fed induction generator (DFIG) converter system. As the skilled reader will appreciate, the DC-AC converter 46 is configured to provide a level of control over the characteristics of the AC power produced, for example to regulate the voltage (V), the active power (P) and the reactive power (Q) delivered by the wind turbine to the plant-level network 16 and, thus, to the collector bus 18. From a practical point of view, it is Type 3 and Type 4 wind turbines that are used in commercial-scale wind power generation, and to which this discussion relates.

Noting that the magnitude, angle and frequency of the output of the wind turbine 12 is dictated by grid requirements set by a TSO, and that the voltage is set at a substantially constant level in accordance with the specifications of the low voltage link 14, in practice only the current of the AC output is controlled, and a wind turbine controller 54 is provided for this purpose. The wind turbine controller 54 is configured to receive target values for the active current $P_{REF}$ and the reactive current $Q_{REF}$ contained in the AC output, and to adjust the AC output accordingly. As is known, the values of $P_{REF}$ and $Q_{REF}$ are transmitted or 'dispatched' to the wind turbine controller 54, by a power plant controller or 'PPC' 60 of the wind power plant 10. It should be noted that the power plant controller 60 may be implemented as hardware, software or a combination of both. Moreover, it may be implemented as a specifically designed hardware module comprising suitable processors, memory modules and interfaces, or it may be implemented as a general purpose computer. In either case, the computing units may to implemented to run suitable software algorithms to carry out the functionality that will be described below.

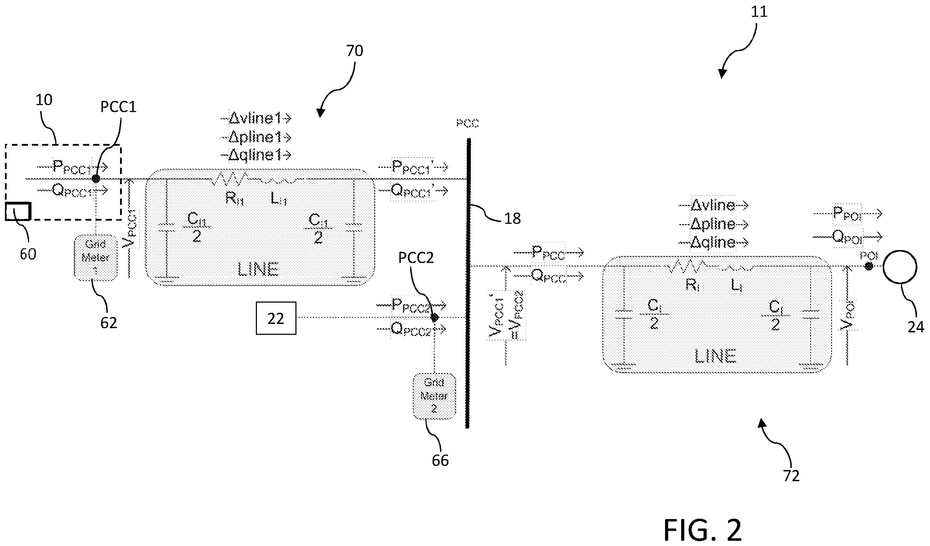

Figure 2 is a simplified electrical representation of the power network 11 of Figure 1 and depicts how the first and the second wind power plants 10, 22 are coupled to the transmission grid 24, and more specifically the point of interconnection POI therewith. In overview:

the first power plant 10 defines a first point of common coupling at the plant-level network 16 (identified as PCC1) which is connected to the collector bus 18 by a first transmission line 70;

the power plant controller 60 of the first power plant monitors the electrical parameters at the point of common coupling PCC1 by way of a first grid meter 62;

the second power plant 22 defines a second point of common coupling (identified as PCC2) which is connected to the collector bus 18 at a second grid meter 66;

the collector bus 18 represents a point of common coupling for the first and second wind power plants 10,22, and is identified as PCC; and

the collector bus 18 (and also, therefore, PCC) to which the first power plant 10 and second power plant 22 are connected, is connected to transmission grid 24 by way of a second transmission line, identified in Figure 2 as 72, at a point of interconnection, identified as POI.

At this point it should be noted that each of the transmission lines 70 and 72 are represented by an equivalent circuit that abbreviates the electrical parameters of the transmission lines to a series resistance R and a series inductance L (together representing an impedance Z) and a shunt capacitance/admittance (C/Y). As is convention for medium length transmission lines, when represented in a nominal $\pi$ circuit configuration, the shunt conductance may be neglected, and the shunt capacitance is divided into two equal components (C/2) each placed at the sending and receiving ends of the transmission line.

A transmission system operator (not shown) specifies the power delivery characteristics that it requires at the POI by issuing reference values for voltage V, active power P and reactive power Q to the power plant controllers of each of the wind power plants. Therefore, it is the responsibility of the power point controllers to ensure that their power delivery meets that which is specified by the grid code requirements. In the transmission network that is illustrated in Figure 2, this objective is complicated by the significant length of the transmission line 72 connecting PCC to the POI, and due to the fact that multiple power plants are connected to the PCC. An object of the embodiments of the invention is to provide an approach for a power plant controller to control its output in order that the power delivered at the POI to a transmission grid better meets the grid specification defined by the grid operator.

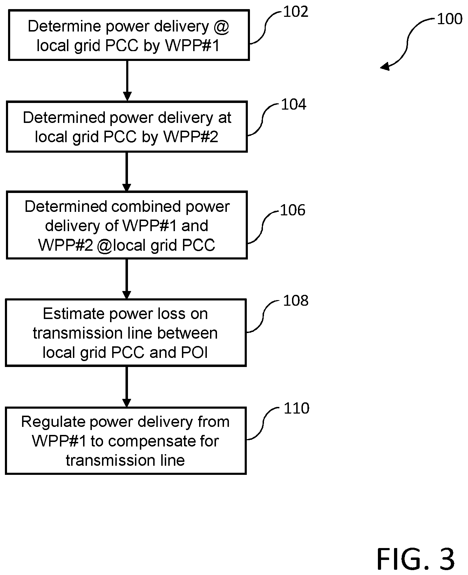

An example of such a technique, or method, will now be explained in more detail with reference to the schematic representation of the power network 11 shown in Figure 2, together with the flow chart of Figure 3 that illustrates an exemplary algorithm that may be performed by the power plant controller 60 of the first wind power plant 10.

In overview, the process 100 implemented by the power plant controller 60 of the first wind power plant 10 comprises the following stages:

Firstly, at step 102, the power plant controller 60 of the first wind power plant 10 determines the power delivery (i.e. active power $P_{PCC'}$ and reactive power $Q_{PCC'}$) at the point of common coupling to the collector bus 18, shown in Figure 2 as PCC. In some instances, the power plant controller 60 may have a grid meter to take power delivery measurements at close proximity to PCC. However, in the illustrated schematic view, the transmission line 70 connects the first wind power plant 10 to the PPC and the length of the transmission line 70 is such that transmission losses across the line cannot be neglected. Thus, the power plant controller 60 uses conventional line droop estimation techniques to estimate the voltage loss across the transmission line, based on the electrical properties of the transmission line such as its resistance, inductance and capacitance, so that an accurate estimate of the power delivery at PCC can be determined, based on the known power delivery at PCC1. This will be explained in further detail below.

Once the effective power delivered at PCC by the first wind power plant 10 has been determined, the process 100 then determines, at step 104, the power delivered to the collector bus 18 by the second power plant 22. In this example, the power delivered to the collector bus 18 by the second power plant 22 is measured directly by the second grid meter 66. Therefore, the power plant controller 60 may either, by way of a suitable data interface, receive electrical parameter data (for example data relating to the voltage V, active power P and reactive power Q delivered by the second wind power plant) from the second grid meter 66 directly, or it may receive such data from the power plant controller (not shown) associated with the second wind power plant 22. Said interface may be configured to be part of a cable-based local area network (LAN) operated under a suitable protocol (CAN-bus or Ethernet for example). It should be appreciated that rather than using cabling, the data may be also transmitted wirelessly over a suitable wireless network.

Once the power delivered by the first power plant 10 (shown as $P_{PCC1}$, and $Q_{PCC1'}$) and the power delivered by the second power plant (shown as $P_{PCC2}$ and $Q_{PCC2}$) at PCC have been determined, it is then possible to determine the total power that is delivered to the POI of the transmission grid 24. Thus, at step 106 the power plant controller 60 combines the power delivered by the first power plant 10, as determined above at step 102, and the power delivered by the second power plant 22, as determined above at step 104. Once the total power delivered at PCC has been determined, taking into account any transmission line losses as appropriate, the total power delivered by both the first and second wind power plants 10,22 to the POI is determined, taking into account the transmission line losses on the associated transmission line 72.

Once the total power delivered to the POI of the transmission grid 24 has been determined, at step 108 the power plant controller then determines the short fall of delivered power, in terms of active power P and reactive power Q, and regulates, at step 110, the power output of the first wind power plant 10 in order to compensate for the short fall. In other words, the power delivery capability of the first wind power plant 10 is used to compensate for the transmission losses along the second transmission line 72 to which both the first wind power plant 10 and the second wind power plant 22 are connected.

Stages of the process described above in overview will now be explained in more detail for a more complete understanding of the calculations involved.

*Determination of the power delivery at the collector bus 18 (PCC) by WPP#1*

As has been explained above, the power delivered at the collector bus 18 by the first power plant 10, that is to say at PCC, may be determined directly by a grid meter if there is one available at that location. However, in the network layout demonstrated in Figure 2, the first power plant 10 is connected to the collector bus 18 by transmission line 70. Therefore, to determine the power delivered at PCC it is necessary to calculate the transmission line losses based on the power measured at the first grid meter 62 located at PCC1 which is at the location at which the first wind power plant 10 connects to the transmission line 72. Such a technique would be known to the skilled person, by the following explanation is given by way of example.

It will be appreciated that the power delivered at the first grid meter 62 (i.e. at PCC1) is equal to the power delivered at PCC plus the power dissipated over the transmission line 70, also known as delta values, thereby providing the following relationships:

$$Q_{PCC1} = Q_{PCC1}' + \Delta Qline1$$
$$P_{PCC1} = P_{PCC1}' + \Delta Pline1 \tag{1}$$
$$\overline{V}_{PCC1} = \overline{V}_{PCC1}' + \Delta \overline{V}line1$$

In the above relationships, the values of $V_{PCC1'}$ and $Q_{PCC1'}$ may be determined by the following expressions:

$$V_{PCC1}' = \sqrt{(V_{PCC1} - (\frac{P_{PCC1}R_{l1}}{V_{PCC1}} + \frac{Q_{PCC1}X_{l1}}{V_{PCC1}} + \frac{V_{PCC1}X_{l1}}{2X_{c1}}))^2 + (\frac{P_{PCC1}X_{l1}}{V_{PCC1}} - \frac{Q_{PCC1}R_{l1}}{V_{PCC1}} - \frac{V_{PCC1}R_{l1}}{2X_{c1}})^2}$$

$$Q_{PCC1}' = Q_{PCC1} - ((\frac{P_{PCC1}}{V_{PCC1}})^2 + (\frac{Q_{PCC1} + \frac{V_{PCC1}}{2X_{c1}}}{V_{PCC1}})^2)X_{l1} + \frac{V_{PCC1}^2}{2X_{c1}} + \frac{(V_{PCC1}')^2}{2X_{c1}}$$

$$\tag{2}$$

In the above expressions, the values of X and R are the values of the reactance and the resistance of the equivalent circuit of the transmission line 70 as shown in Figure 2.

From the above expressions, since the voltage and power delivered at the grid meter 62 is known, and since the voltage and power delivered at PCC has been estimated (P,$Q_{PCC1}$), then it is then possible to determine the delta values for active power P, reactive power Q and voltage V, between the two ends of the transmission line 70 using the following expressions:

$$\Delta Pline1 = R_{l1}((\frac{P_{PCC1}}{V_{PCC1}})^2 + (\frac{Q_{PCC1} + \frac{V_{PCC1}}{2X_{c1}}}{V_{PCC1}})^2)$$

$$\Delta Qline1 = Q_{PCC1} - Q_{PCC1}'$$

$$\Delta Vline1 = V_{PCC1} - V_{PCC1}'$$

$$(3)$$

### Determination of the power delivery at the collector bus 18 by WPP#2

As has been described, the power delivered at the collector bus 18 by the second power plant 22 is relatively straightforward in the network layout of Figure 2 since the grid meter 66 associated with the second power plant 22 can measure the electrical parameters of power delivery (V, P and Q) directly and transmit this data to the power plant controller 60 of the first power plant 10.

However, it should be appreciated that the same line droop technique as explained in the set of expressions (1)-(3) above may be used in the event that the second power plant 22 was connected to the collector bus 18 by a transmission line of a significant length, for example between 5km and 100km.

### Determining power delivered at collector bus 18 (PCC) and transmission grid 24 (POI)

As discussed in overview above in respect of steps 106 and 108 of Figure 3, once the power delivered by each of the first wind power plant 10 and the second wind power plant 22 has been determined, either through line droop estimation techniques, or through direct measurements of the power delivery at a suitable grid meter, if available, the power plant controller 60 must then determine the total power loss associated with the transmission line 72 that connects the collector bus 18 to the transmission grid 24, that is to say between PCC and POI.

To achieve this, the power plant controller 60 may once again carry out suitable line droop estimation techniques. Firstly, it should be noted that the total delivered power to the collector bus 18, i.e. at PCC, is equal to the sum of the power delivered by the first wind power plant 10, as reduced by the power loss along the associated transmission line 70 as described above at the associated above expressions (1). Secondly, it should be appreciated that this total delivered power at the collector bus 18 is reduced by transmission line losses associated with the second transmission line 72 so that a correspondingly reduced power is delivered at the POI of the transmission grid 24. Thus, these factors result in the following expressions

$$Q_{PCC} = Q_{PCC1}' + Q_{PCC2} = Q_{POI} + \Delta Qline$$

$$P_{PCC} = P_{PCC1}' + P_{PCC2} = P_{POI} + \Delta Pline$$

$$\overline{V}_{PCC} = \overline{V}_{POI} + \Delta \overline{V}line$$

$$(4)$$

In the above relationships, the values of $P_{POI}$ and $Q_{POI}$ may be determined by the following expressions:

$$V_{POI} = \sqrt{(V_{PCC} - (\frac{P_{PCC}R_l}{V_{PCC}} + \frac{Q_{PCC}X_l}{V_{PCC}} + \frac{V_{PCC}X_l}{2X_c}))^2 + (\frac{P_{PCC}X_l}{V_{PCC}} - \frac{Q_{PCC}R_l}{V_{PCC}} - \frac{V_{PCC}R_l}{2X_c})^2}$$

$$Q_{POI} = Q_{PCC} - ((\frac{P_{PCC}}{V_{PCC}})^2 + (\frac{Q_{PCC} + \frac{V_{PCC}}{2X_c}}{V_{PCC}})^2)X_l + \frac{V_{PCC}^2}{2X_c} + \frac{V_{POI}^2}{2X_c}$$

$$(5)$$

In the above expressions, the values of X and R are the values of the reactance and the resistance of the equivalent circuit of the transmission line 72 between the collector bus 18 and the transmission grid 24, as shown in Figure 2.

Thus, it becomes possible with the above expressions to determine the delta values for active power P, reactive power Q and voltage V, between the two ends of the transmission line 72 connecting the collector bus 18 and the transmission grid 24, using the following expressions:

$$\Delta Pline = R_l((\frac{P_{PCC}}{V_{PCC}})^2 + (\frac{Q_{PCC} + \frac{V_{PCC}}{2X_c}}{V_{PCC}})^2)$$

$$\Delta Qline = Q_{PCC} - Q_{POI} \tag{6}$$

$$\Delta Vline = V_{PCC} - V_{POI}$$

***Regulation of power output of WPP#1***

From the above expressions (1)-(6) it will be appreciated that transmission line losses have been calculated for both of the transmission lines 70,72 in the power transmission network 11. That is to say the losses for the first transmission line 70 connecting the first wind power plant 10 with the collector bus 18 (see the expressions at (3)), and the second transmission line 72 that connects the collector bus 18 to the transmission grid 24 (see the expressions at (6)).

Therefore, the power plant controller 60 of the first wind power plant 10 has the information that is necessary to compensate for the transmission line losses between it and the transmission grid 24. In the network layout of Figure 2, the power plant controller 60 is operable to increase its power delivery, that is to say, to increase its output voltage, active power and reactive power, in order to ensure that the power delivered at the POI of transmission grid 24 meets that which is demanded by the grid operator.

It should be noted that the regulation that the power plant controller 60 performs would be suitable regulation of voltage, active power and reactive power which need not be regulated by the same amount. In the specific example given, therefore, the total regulated power delivered by the first wind power plant 10 would be equal to the power delivered at the first grid meter 62 suitably increased by the calculated delta values representing the power loss in each of the transmission lines 70, 72. From the above expressions, the power plant controller 60 may regulate its power delivery according to the following expressions that represent compensation factors to be applied to the power output of the power plant:

$$\Delta V_{TOTAL} = \Delta V_{LINE} + \Delta V_{LINE1}$$

$$\Delta P_{TOTAL} = \Delta P_{LINE} + \Delta P_{LINE1} \tag{7}$$

$$\Delta Q_{TOTAL} = \Delta Q_{LINE} + \Delta Q_{LINE1}$$

The embodiments described above illustrate an example of how the inventive concept may be implemented. The skilled person would understand that the embodiments described and illustrated here could be modified in a way which would not depart from the inventive concept, as defined by the claims.

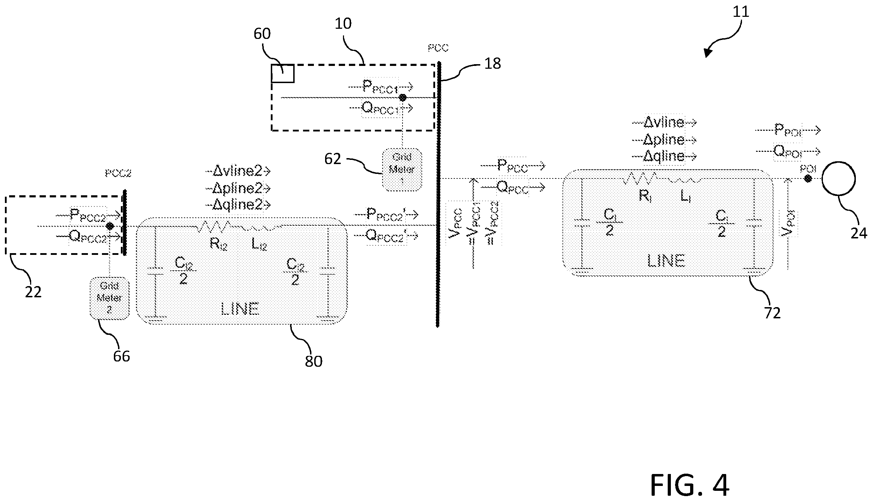

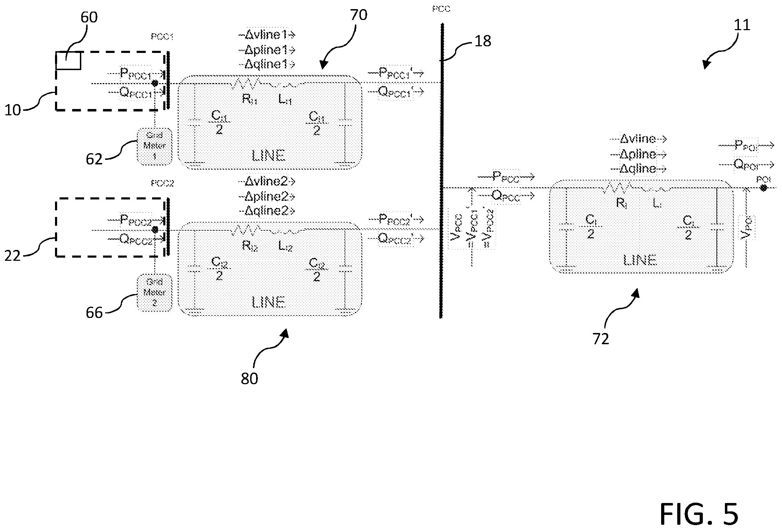

For example, in the power network of Figure 2, the first wind power plant is connected to the collector bus 18 by a first transmission line 70 whilst the second wind power plant 22 is connected to the collector bus directly, or at least through a transmission line which is short enough such that transmission losses across it may be considered to be negligible. However, it would be appreciated that other power network layouts are envisaged, and of which Figures 4 and 5 show examples.

Figures 4 and 5 illustrate power networks that are similar to that of Figure 2, albeit with some differences, which will now be briefly explained. In each of those figures, the same reference numerals will be used to refer to items common to Figure 2.

In Figure 4, the first wind power plant 10 is connected substantially directly to the collector bus 18, or at least through a negligibly short transmission line. However, the second power plant 22 is connected to the collector bus 18 through a further transmission line 80 across which a power loss would apply. The skilled person would understand that calculations similar to those explained above would be carried out in order to determine the effective power delivered by the second power plant 22 to the collector bus 18 based on the second grid meter 66 so as to take into account the power loss across the associated transmission line 80, and thereafter to determine the total power loss over the two transmission lines 72, 80 so that the power plant controller 60 of the first wind power plant 10 is able to regulate the power output in order to compensate for said power loss.

In Figure 5 both the first wind power plant 10 and the second wind power plant 22 are each connected to the collector bus 18 by a non-negligible transmission lines, which are labelled as 70 and 80, respectively, for consistency with the corresponding transmission lines in Figures 2 and 4. Thus, the power point controller 60 of the first wind power plant 10 may carry out suitable calculations similar to those described above in order to calculate the power loss over the three transmission lines 70,72 and 80 so that it is able to regulate its output to compensate for the losses.

It should be noted that although the specific embodiments relate to wind power plants, the same principle applies to other renewable energy power plants such as photovoltaic power plants. Moreover, although the illustrated embodiments show two power plants connected to the collector bus 18, it should be appreciate that in other embodiment there may be many more power plants connected to the collector bus 18 and the same estimation principles described above would apply.

**Claims**

1. A computer-implemented method of controlling a first renewable energy power plant using a respective power plant controller, wherein the first renewable energy power plant comprises a plurality of wind turbine generators, the method comprising operating the power plant controller to:

   determine power delivery of the first renewable energy power plant to a collector bus, wherein the step of determining power delivery of the first renewable energy power plant to the collector bus includes:
   measuring the power delivery of the first renewable energy power plant at a connection point of the first renewable energy power plant to a first transmission line that connects the first renewable energy power plant to the collector bus; and compensating for transmission line power loss on the first transmission line;
   receive data relating to power delivery from a second renewable energy power plant connected to the collector bus, wherein the second renewable energy power plant comprises a plurality of wind turbine generators;
   determine the combined power delivery of the first and second renewable energy power plants to the collector bus;
   estimate the transmission line power loss on a second transmission line between the collector bus and a power grid point of interconnection (POI) based on the combined power delivery; and
   regulate the power delivery from the first renewable energy power plant to compensate for the estimated transmission line power loss on the second transmission line.

2. The method of any of the preceding claims, wherein the power delivery data associated with the second renewable energy power plant is received from a respective power plant controller that measures directly the power delivery of said power plant.

3. The method of claim 1 or claim 2, wherein the power delivery data associated with the second renewable energy power plant is received from a respective power plant controller that estimates the power delivery of said power plant

4. The method of any preceding claim, wherein determining the combined power delivery includes summing the power delivery of the first and second renewable energy power plants.

5. The method of any preceding claim, wherein regulating the power delivery from the first renewable energy power plant includes adding a compensation factor to the determined power delivery from that power plant.

6. The method of any preceding claim, wherein the power delivery comprises at least one of the following characteristics: voltage, active power, reactive power.

7. A power plant controller for a respective renewable energy power plant configured to control at least one power delivery characteristic of the renewable energy power plant at a connection point to a collector bus, the power plant comprising a plurality of wind turbine generators, the power plant controller comprising:

   an interface for receiving data relating to power delivery from a second renewable energy power plant connected to the collector bus, wherein the second renewable energy power plant comprises a plurality of wind turbine generators;
   wherein the power plant controller is configured to:

      determine power delivery of the first renewable energy power plant to the collector bus, wherein determining power delivery of the first renewable energy power plant to the collector bus includes:

measuring the power delivery of the first renewable energy power plant at the connection point of the first renewable energy power plant to a first transmission line that connects the first renewable energy power plant to the collector bus; and compensating for transmission line power loss on the first transmission line; receive data relating to power delivery over the interface from the second renewable energy power plant connected to the collector bus;

determine the combined power delivery of the first and second renewable energy power plants to the collector bus;

estimate the transmission line power loss on a second transmission line between the collector bus and a power grid point of interconnection (POI) based on the determined combined power delivery; and

regulate the power delivery from the first renewable energy power plant to compensate for the estimated transmission line power loss on the second transmission line.

8. A computer program product downloadable from a communication network and/or stored on a machine readable medium, comprising program code instructions for implementing a method according to claims 1 to 6 when the program code instructions are executed on a computer.

**Patentansprüche**

1. Computerimplementiertes Verfahren zum Steuern eines ersten Kraftwerks für erneuerbare Energie unter Verwendung einer jeweiligen Parksteuervorrichtung, wobei das erste Kraftwerk für erneuerbare Energie eine Vielzahl von Windkraftanlagen umfasst, wobei das Verfahren umfasst, die Parksteuervorrichtung zu betreiben zum:

Bestimmen einer Leistungsabgabe des ersten Kraftwerks für erneuerbare Energie an einen Sammelbus, wobei der Schritt zum Bestimmen einer Leistungsabgabe des ersten Kraftwerks für erneuerbare Energie an den Sammelbus beinhaltet:

Messen der Leistungsabgabe des ersten Kraftwerks für erneuerbare Energie an einem Anschlusspunkt des ersten Kraftwerks für erneuerbare Energie an eine erste Übertragungsleitung, die das erste Kraftwerk für erneuerbare Energie an den Sammelbus anschließt; und Kompensieren eines Übertragungsleitungsleistungsverlusts auf der ersten Übertragungsleitung;

Empfangen von Daten bezüglich Leistungsabgabe von einem zweiten Kraftwerk für erneuerbare Energie, das an den Sammelbus angeschlossen ist, wobei das zweite Kraftwerk für erneuerbare Energie eine Vielzahl von Windkraftanlagen umfasst;

Bestimmen der kombinierten Leistungsabgabe des ersten und zweiten Kraftwerks für erneuerbare Energie an den Sammelbus;

Schätzen des Übertragungsleitungsleistungsverlusts auf einer zweiten Übertragungsleitung zwischen dem Sammelbus und einem Stromnetzanschlusspunkt (POI) basierend auf der kombinierten Leistungsabgabe; und Regulieren der Leistungsabgabe von dem ersten Kraftwerk für erneuerbare Energie, um den geschätzten Übertragungsleitungsleistungsverlust auf der zweiten Übertragungsleitung zu kompensieren.

2. Verfahren nach einem der vorstehenden Ansprüche, wobei die mit dem zweiten Kraftwerk für erneuerbare Energie verbundenen Leistungsabgabedaten von einer jeweiligen Parksteuervorrichtung empfangen werden, die die Leistungsabgabe des Kraftwerks direkt misst.

3. Verfahren nach Anspruch 1 oder Anspruch 2, wobei die mit dem zweiten Kraftwerk für erneuerbare Energie verbundenen Leistungsabgabedaten von einer jeweiligen Parksteuervorrichtung empfangen werden, die die Leistungsabgabe des Kraftwerks schätzt.

4. Verfahren nach einem vorstehenden Anspruch, wobei Bestimmen der kombinierten Leistungsabgabe Summieren der Leistungsabgabe des ersten und zweiten Kraftwerks für erneuerbare Energie beinhaltet.

5. Verfahren nach einem vorstehenden Anspruch, wobei Regulieren der Leistungsabgabe von dem ersten Kraftwerk für erneuerbare Energie Hinzufügen eines Kompensationsfaktors zu der bestimmten Leistungsabgabe von diesem Kraftwerk beinhaltet.

6. Verfahren nach einem vorstehenden Anspruch, wobei die Leistungsabgabe mindestens eine der folgenden Eigenschaften umfasst: Spannung, Wirkleistung, Blindleistung.

**7.** Parksteuervorrichtung für ein jeweiliges Kraftwerk für erneuerbare Energie, die konfiguriert ist, mindestens eine Leistungsabgabeeigenschaft des Kraftwerks für erneuerbare Energie an einem Anschlusspunkt an einen Sammelbus zu steuern, wobei das Kraftwerk eine Vielzahl von Windkraftanlagen umfasst, wobei die Parksteuervorrichtung umfasst:

eine Schnittstelle zum Empfangen von Daten bezüglich einer Leistungsabgabe von einem zweiten Kraftwerk für erneuerbare Energie, das an den Sammelbus angeschlossen ist, wobei das zweite Kraftwerk für erneuerbare Energie eine Vielzahl von Windkraftanlagen umfasst;
wobei die Parksteuervorrichtung konfiguriert ist zum:
Bestimmen einer Leistungsabgabe des ersten Kraftwerks für erneuerbare Energie an den Sammelbus, wobei Bestimmen einer Leistungsabgabe des ersten Kraftwerks für erneuerbare Energie an den Sammelbus beinhaltet:
Messen der Leistungsabgabe des ersten Kraftwerks für erneuerbare Energie an dem Anschlusspunkt des ersten Kraftwerks für erneuerbare Energie an eine erste Übertragungsleitung, die das erste Kraftwerk für erneuerbare Energie an den Sammelbus anschließt; und Kompensieren eines Übertragungsleitungsleistungsverlusts auf der ersten Übertragungsleitung;
Empfangen von Daten bezüglich der Leistungsabgabe über die Schnittstelle von dem zweiten Kraftwerk für erneuerbare Energie, das an den Sammelbus angeschlossen ist;
Bestimmen der kombinierten Leistungsabgabe des ersten und zweiten Kraftwerks für erneuerbare Energie an den Sammelbus;
Schätzen des Übertragungsleitungsleistungsverlusts auf einer zweiten Übertragungsleitung zwischen dem Sammelbus und einem Netzanschlusspunkt (POI) basierend auf der bestimmten kombinierten Leistungsabgabe; und
Regulieren der Leistungsabgabe von dem ersten Kraftwerk für erneuerbare Energie, um den geschätzten Übertragungsleitungsleistungsverlust auf der zweiten Übertragungsleitung zu kompensieren.

**8.** Computerprogrammprodukt, das von einem Kommunikationsnetzwerk heruntergeladen werden kann und/oder auf einem maschinenlesbaren Medium gespeichert ist, das Programmcodeanweisungen umfasst, um ein Verfahren nach den Ansprüchen 1 bis 6 zu implementieren, wenn die Programmcodeanweisungen auf einem Computer ausgeführt werden.

**Revendications**

**1.** Procédé mis en oeuvre par ordinateur pour commander une première centrale électrique à énergie renouvelable à l'aide d'un dispositif de commande de centrale électrique respectif, dans lequel la première centrale électrique à énergie renouvelable comprend une pluralité d'aérogénérateurs, le procédé consistant à faire fonctionner le dispositif de commande de centrale électrique pour :

déterminer une fourniture de puissance de la première centrale électrique à énergie renouvelable à un bus collecteur, dans lequel l'étape de détermination de fourniture de puissance de la première centrale électrique à énergie renouvelable au bus collecteur inclut les étapes consistant à :
mesurer la fourniture de puissance de la première centrale électrique à énergie renouvelable au niveau d'un point de connexion de la première centrale électrique à énergie renouvelable à une première ligne de transmission qui connecte la première centrale électrique à énergie renouvelable au bus collecteur ; et compenser une perte de puissance de ligne de transmission sur la première ligne de transmission ;
recevoir des données relatives à une fourniture de puissance à partir d'une seconde centrale électrique à énergie renouvelable connectée au bus collecteur, dans lequel la seconde centrale électrique à énergie renouvelable comprend une pluralité d'aérogénérateurs ;
déterminer la fourniture de puissance combinée des première et seconde centrales électriques à énergie renouvelable au bus collecteur ;
estimer la perte de puissance de ligne de transmission sur une seconde ligne de transmission entre le bus collecteur et un point d'interconnexion (POI) de réseau électrique sur la base de la fourniture de puissance combinée ; et
réguler la fourniture de puissance à partir de la première centrale électrique à énergie renouvelable pour compenser la perte de puissance de ligne de transmission estimée sur la seconde ligne de transmission.

**2.** Procédé selon l'une quelconque des revendications précédentes, dans lequel les données de fourniture de puissance associées à la seconde centrale électrique à énergie renouvelable sont reçues d'un dispositif de commande de centrale électrique respectif qui mesure directement la fourniture de puissance de ladite centrale électrique.

3. Procédé selon la revendication 1 ou la revendication 2, dans lequel les données de fourniture de puissance associées à la seconde centrale électrique à énergie renouvelable sont reçues d'un dispositif de commande de centrale électrique respectif qui estime la fourniture de puissance de ladite centrale électrique.

4. Procédé selon une quelconque revendication précédente, dans lequel la détermination de la fourniture de puissance combinée inclut une addition de la fourniture de puissance des première et seconde centrales électriques à énergie renouvelable.

5. Procédé selon une quelconque revendication précédente, dans lequel la régulation de la fourniture de puissance à partir de la première centrale électrique à énergie renouvelable inclut un ajout d'un facteur de compensation à la fourniture de puissance déterminée à partir de cette centrale électrique.

6. Procédé selon une quelconque revendication précédente, dans lequel la fourniture de puissance comprend au moins l'une des caractéristiques suivantes : tension, puissance active, puissance réactive.

7. Dispositif de commande de centrale électrique pour une centrale électrique à énergie renouvelable respective, configuré pour commander au moins une caractéristique de fourniture de puissance de la centrale électrique à énergie renouvelable au niveau d'un point de connexion à un bus collecteur, la centrale électrique comprenant une pluralité d'aérogénérateurs, le dispositif de commande de centrale électrique comprenant :

une interface pour recevoir des données relatives à une fourniture de puissance à partir d'une seconde centrale électrique à énergie renouvelable connectée au bus collecteur, dans lequel la seconde centrale électrique à énergie renouvelable comprend une pluralité d'aérogénérateurs ;
dans lequel le dispositif de commande de centrale électrique est configuré pour :
déterminer une fourniture de puissance de la première centrale électrique à énergie renouvelable au bus collecteur, dans lequel la détermination de fourniture de puissance de la première centrale électrique à énergie renouvelable au bus collecteur inclut les étapes consistant à :
mesurer la fourniture de puissance de la première centrale électrique à énergie renouvelable au niveau du point de connexion de la première centrale électrique à énergie renouvelable à une première ligne de transmission qui connecte la première centrale électrique à énergie renouvelable au bus collecteur ; et compenser une perte de puissance de ligne de transmission sur la première ligne de transmission ;
recevoir des données relatives à la fourniture de puissance via l'interface à partir de la seconde centrale électrique à énergie renouvelable connectée au bus collecteur ;
déterminer la fourniture de puissance combinée des première et seconde centrales électriques à énergie renouvelable au bus collecteur ;
estimer la perte de puissance de ligne de transmission sur une seconde ligne de transmission entre le bus collecteur et un point d'interconnexion (POI) de réseau électrique sur la base de la fourniture de puissance combinée déterminée ; et
réguler la fourniture de puissance à partir de la première centrale électrique à énergie renouvelable pour compenser la perte de puissance de ligne de transmission estimée sur la seconde ligne de transmission.

8. Produit de programme informatique pouvant être téléchargé à partir d'un réseau de communication et/ou stocké sur un support lisible par machine, comprenant des instructions de code de programme pour mettre en oeuvre un procédé selon les revendications 1 à 6 lorsque les instructions de code de programme sont exécutées sur un ordinateur.

FIG. 1

FIG. 2

EP 3 436 692 B1

```
┌─────────────────────────────┐
│ Determine power delivery @   │──── 102
│   local grid PCC by WPP#1    │
└─────────────────────────────┘
              │
              ▼
┌─────────────────────────────┐
│ Determined power delivery at │──── 104
│    local grid PCC by WPP#2   │
└─────────────────────────────┘
              │
              ▼
┌─────────────────────────────┐
│   Determined combined power  │──── 106
│    delivery of WPP#1 and     │
│    WPP#2 @local grid PCC     │
└─────────────────────────────┘
              │
              ▼
┌─────────────────────────────┐
│    Estimate power loss on    │──── 108
│  transmission line between   │
│   local grid PCC and POI     │
└─────────────────────────────┘
              │
              ▼
┌─────────────────────────────┐
│ Regulate power delivery from │──── 110
│  WPP#1 to compensate for     │
│      transmission line       │
└─────────────────────────────┘
```

100

FIG. 3

FIG. 4

EP 3 436 692 B1

FIG. 5

**EP 3 436 692 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2800224 A1
- US 2010025994 A1
- US 2009218817 A1